# EUROPÄISCHE PATENTSCHRIFT

(11) **EP 1 611 987 B1**
(45) Veröffentlichungstag und Bekanntmachung des Hinweises auf die Patenterteilung: **11.04.2012**
(21) Anmeldenummer: 05014081.3
(22) Anmeldetag: 29.06.2005
(51) Int. Cl.: B23K 3/08, B01D 8/00

(54) **Verfahren zur Selbstreinigung einer Reinigungsvorrichtung eines Lötofens und Lötofen zur Durchführung des Verfahrens**
Self cleaning method for a cleaning apparatus used in a brazing furnace, and brazing furnace therefore
Méthode pour l'autonettoyage d'un organe autonettoyant d'un four de brasage et four de brasage utilisé.

(30) Priorität: 30.06.2004 DE 102004031713
(43) Veröffentlichungstag der Anmeldung: 04.01.2006
(73) Patentinhaber: Fujitsu Technology Solutions Intellectual Property GmbH, 80807 München (DE)
(72) Erfinder: Gebele, Josef, 89407 Dillingen (DE); Köhler, Franz X., 86368 Batzenhofen (DE)
(74) Vertreter: Epping - Hermann - Fischer

(56) Entgegenhaltungen:
- EP-A- 1 083 219
- DE-B3- 10 301 102
- US-A- 4 023 983
- US-A- 5 831 238

## Beschreibung

Die Erfindung betrifft ein Verfahren zum Reinigen einer Reinigungsvorrichtung eines Lötofens mit wenigstens einer Prozesskammer, in die ein Prozessgas für einen Lötprozess eingeleitet wird. Weiter betrifft die Erfindung ein Lötofen gemäß dem Oberbegriff des Anspruchs 5. Ein derartiger Ofen ist in DE 103 01 102 B3 offenbart.

Zum Verlöten von elektronischen Bauteilen mit Leiterplatten werden heutzutage in der Industrie Lötöfen verwendet. In einem Lötofen werden mehrere Leiterplatten gleichzeitig mit den aufgesetzten Bauteilen verlötet.

Die bestückten Leiterplatten werden in der Regel über ein automatisches Transportsystem in den Lötofen transportiert. Das Lot befindet sich entweder auf den Leiterplatten oder an den Bauteilen an den dafür vorgesehenen Stellen. Reicht diese Menge Lot nicht aus, so wird zusätzlich Lotpaste gedruckt. Durch Erhitzen des Lötofens schmilzt das Lot und verbindet Leiterplatten und Bauteile.

Lötöfen bei denen das Lot im Voraus auf Platinen und Bauteile aufgebracht wird und dann im Reflowprozeß erneut aufgeschmolzen wird nennt man Reflowöfen. Diese funktionieren nach unterschiedlichen Prinzipien. Die Prozesskammer kann vakuumisiert oder mit einem Schutzgas gefüllt sein, wie z.B. Stickstoff.

Beim Lötvorgang gasen die unterschiedlichsten Stoffe aus Lotpaste, Bauteilen und Leiterplatte aus. Bei dem Beispiel Lotpaste handelt es sich dabei um den darin enthaltenen Flussmittelanteil. Diese Stoffe mischen sich mit dem Schutzgas. Um das Schutzgas zu reinigen und den Lötofen sauber zu halten, weisen moderne Reflowöfen Reinigungseinrichtungen, z.B. Kältefallen, Filter, Absorber oder Zyklone auf, durch welche das Prozessgas gereinigt wird. Diese Verfahrensweise wird Fluxmanagement oder Residuenmanagement genannt.

Lötöfen der eingangs erwähnten Art sind aus der DE 103 01 102 B3 bekannt. Beispielsweise sind Lötöfen der Vision 8-Serie der Firma Rehm-Anlagenbau für die industrielle Großfertigung gedacht. Sie verfügen über eine Prozesskammer und Reinigungseinrichtungen zur Reinigung der Prozessgase. Als Reinigungseinrichtungen werden bei diesen Öfen Zyklone verwendet.

Im Groben besteht ein Zyklon aus einem senkrecht stehenden Zylinder, einem Auffangbehälter darunter und einem Steigrohr in der Mitte oberhalb des Auffangbehälters. Das verschmutzte Gas wird oben in den Zylinder eingeblasen, die Verschmutzungen kondensieren an der Mantelfläche aus und fließen in den Auffangbehälter. Das gereinigte Gas steigt über das Steigrohr aus dem Zyklon. Die Auffangbehälter müssen in regelmäßigen Abständen geleert bzw. ausgewechselt werden.

Diese Art der Selbstreinigung funktioniert allerdings nur für Verschmutzungen, die an der Mantelfläche des Zyklons kondensieren und nach unten abfließen. Im verunreinigten Gas befinden sich aber auch feste Stoffe, die sich an der Mantelfläche des Zyklons in fester Form niederschlagen.

Derartige feste Verunreinigungen bilden mit der Zeit eine immer dicker werdende Schicht an der Wand des Zyklons. Daher muss diese Reinigungseinrichtung selbst immer wieder gereinigt und gewartet werden. Dies ist mit einem erheblichen Arbeitsaufwand verbunden. Je größer der Anteil fester Verunreinigungen desto kürzer die benötigten Wartungsintervalle.

Dies gilt nicht nur für Zyklone. Auch andere Reinigungseinrichtungen wie Kältefallen, Filter und Absorbermaterialien werden durch die festen Rückstände mit der Zeit verstopft. Dann sind aufwendige Reinigungsarbeiten nötig, die mit einem erheblichen Produktionsausfall verbunden sind.

Aus der Druckschrift DE 103 01 102 B3 ist ein Verfahren zum Reinigen eines Prozessgases eines Lötofens bekannt, bei dem das zu reinigende Prozessgas dem Lötofen entnommen und danach durch eine Kondensfalle geleitet wird, wobei das zu reinigende Prozessgas auf dem Weg zur Kondensfalle hinsichtlich seiner Temperatur und seines Volumenstroms derart eingestellt wird, dass eine Kondensation der rückzuhaltenden Verunreinigungen in der Kondensfalle gewährleistet ist.

Die Druckschrift DE 199 25 967 C2 beschreibt ein Verfahren zum Reinigen eines Prozessgases eines Reflowlötofens. Hierin wird zur leichteren Entfernung kondensierter Fremdstoffe die Innenwand einer Kondensfalle mit einer Wasser-Eisschicht versehen, durch deren Abschmelzen ein Abwaschen der kondensierten Fremdstoffe bewirkt werden kann.

Aus der US 40 23 983 ist ein Reinigungsverfahren für feste Substanzen bekannt, bei der in einer Reinigungseinrichtung eine Flüssigkeit verdampft wird, die an gekühlten Seitenwänden der Reinigungseinrichtung kondensiert und dort befindliche Verunreinigungen aufnimmt und in einen Sammelbereich am Boden abführt.

Der vorliegenden Erfindung daher die Aufgabe zu Grunde, ein einfaches Verfahren zum Reinigen einer Reinigungseinrichtung eines Lötofens sowie einen Lötofen aufzuzeigen, bei welchem feste Verunreinigungen in der Reinigungseinrichtung automatisch beseitigt werden, damit der Selbstreinigungseffekt verbessert wird und somit die Wartungsintervalle maßgeblich verlängert werden.

Die Aufgabe wird erfindungsgemäß dadurch gelöst, dass der Prozesskammer bzw. dem Prozessgaskreislauf während des Betriebes ein flüssiges Medium zugeführt wird, das verdampft, in einer Kühlzone der Reinigungseinrichtung kondensiert und dort feste Kondensationsprodukte verflüssigt.

Diese mischen sich mit dem übrigen Kondensat und können leicht abgeführt und entsorgt werden. Die Reinigungseinrichtung bleibt somit nahezu frei von festen Rückständen.

Bei dem Medium handelt es sich in einer bevorzugten Ausführungsform um eine rückstandsfrei verdampfbare Flüssigkeit. Dadurch wird verhindert, dass der Lötofen durch das beigefügte Medium zusätzlich verschmutzt wird.

Von Vorteil ist, wenn die Siedetemperatur des Mediums zwischen 150°C und 250°C liegt und die Zündtemperatur über 350°C liegt.

Weitere Einzelheiten und Ausgestaltungen der Erfindung sind in den angehängten Patentansprüchen angegeben.

Die Erfindung wird nachfolgend an einem Ausführungsbeispiel anhand der Zeichnungen näher erläutert.

In den Zeichnungen zeigen
- Figur 1: eine schematische Darstellung einer Prozesskammer mit Flüssigkeitszufuhr,
- Figur 2: Querschnitt durch eine Reinigungseinrichtung.

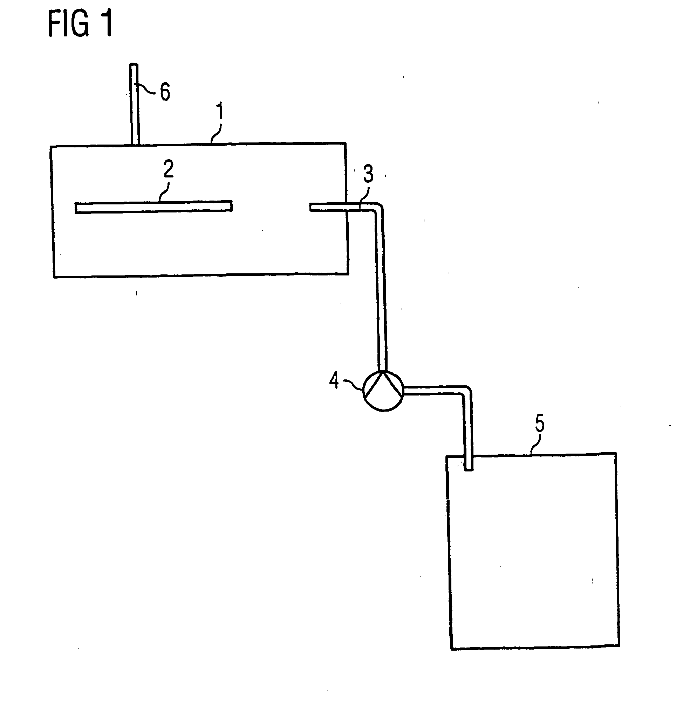

Figur 1 zeigt den Querschnitt durch eine Prozesskammer 1 eines Reflowofens. In der Prozesskammer 1 befindet sich eine Leiterplatte 2 mit Bauteilen. Die Prozesskammer 1 ist mit gasförmigem Stickstoff gefüllt. In die Prozesskammer 1 ragt eine Vorrichtung 3, durch welche während eines Lötvorgangs Ethylenglycol in der Prozesskammer 1 verdampft wird. Das zu verdampfende Volumen an Ethylenglycol wird in der Dosierpumpe 4 bestimmt. Bei dem Dosiervolumen handelt es sich um ca. einen Liter pro 24 Stunden. Die Dosierpumpe 4 ist mit einem Tank 5 verbunden, welcher mit Ethylenglycol gefüllt ist.

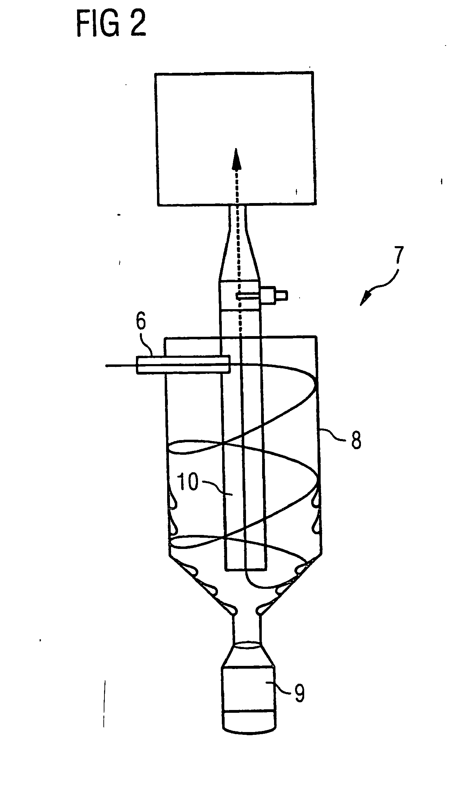

Durch das Verdampfen des Mediums in der Prozesskammer 1 tritt nicht nur in Reinigungseinrichtungen 7 (siehe Figur 2) ein Selbstreinigungseffekt ein, sondern auch in der Prozesskammer 1, in Kühlzonen, in einer Rückleitung 6 und in anderen Prozessgasleitungen.

Bei dem Lötprozess werden in dem Lötofen Temperaturen erreicht, bei denen Ethylenglycol mit einer Siedetemperatur von 197°C vollständig verdampft. Die erreichten Temperaturen sind unbedenklich, da die Zündtemperatur von Ethylenglycol über 350°C liegt und diese Temperatur beim Lötprozess nicht überschritten wird. Ethylenglycol ist relativ ungefährlich und preisgünstig.

Das verdampfte Ethylenglycol vermischt sich in der Prozesskammer 1 mit dem Prozessgas Stickstoff und den darin enthaltenen ausgegasten Verunreinigungen. Das Gasgemisch wird über die Rückleitung 6 zu der Reinigungseinrichtung 7 (siehe Figur 2) geleitet.

Figur 2 zeigt die Reinigungseinrichtung 7, in Form eines Zyklons, in welches über die Rückleitung 6 das Gasgemisch aus der Prozesskammer 1 (siehe Figur 1) geblasen wird. An der Mantelfläche 8 der Reinigungseinrichtung 7 schlagen sich feste Verunreinigungen aus dem Gasgemisch nieder. Das dem Prozessgas beigemischte Ethylenglycol kondensiert an der Mantelfläche 8 der Reinigungseinrichtung 7 aus. Das flüssige Ethylenglycol löst die an der Mantelfläche 8 niedergeschlagenen Verunreinigungen und spült diese in den Auffangbehälter 9. Das gereinigte Gas steigt über das Steigrohr 10 auf und kann für einen erneuten Lötprozess verwendet werden.

Die Erfindung ist nicht auf das angegebene Ausführungsbeispiel beschränkt.

Als Reinigungsmittel können auch beliebige andere Medien verwendet werden, welche die dafür nötigen Eigenschaften aufweisen.

Das Medium kann auch an einer anderen Stelle als der Prozesskammer 1 dem Prozesskreislauf zugeführt werden.

Des Weiteren kann es sich bei der Reinigungseinrichtung auch um Filter, Kältefallen oder Absorbermaterialien handeln.

Insbesondere kann die Erfindung für jeglichen Prozess verwendet werden, bei dem sich aus einem Prozessgas feste Stoffe abscheiden, welche dann aus den Reinigungseinrichtungen entfernt werden müssen.

### Bezugszeichenliste

- 1: Prozesskammer
- 2: Leiterplatte mit Bauteilen
- 3: Vorrichtung
- 4: Dosierpumpe
- 5: Tank
- 6: Rückleitung
- 7: Reinigungseinrichtung
- 8: Mantelfläche
- 9: Auffangbehälter
- 10: Steigrohr

## Patentansprüche

1. Verfahren zur Selbstreinigung einer Reinigungseinrichtung (7) eines Lötofens umfassend die Reinigungseinrichtung (7) und wenigstens eine Prozesskammer (1), in die ein Prozessgas für einen Lötprozess eingeleitet wird, bei dem der Prozesskammer (1) oder dem Prozessgaskreislauf während eines Lötvorgangs ein flüssiges Medium zugeführt wird, das verdampft, in einer Kühlzone (8) der Reinigungseinrichtung (7) kondensiert und dort feste Verunreinigungen verflüssigt.

2. Verfahren nach Anspruch 1
**dadurch gekennzeichnet, dass**
das flüssige Medium seinen Siedepunkt im Bereich von 150° - 250°C hat.

3. Verfahren nach Anspruch 2
**dadurch gekennzeichnet, dass**
die Zündtemperatur des flüssigen Medium über 350°C liegt.

4. Verfahren nach einem der Ansprüche 1 bis 3
**dadurch gekennzeichnet, dass**
es sich bei dem flüssigen Medium um Ethylenglycol handelt.

5. Lötofen umfassend mindestens eine Prozesskammer (1), in die für einen Lötprozess Prozessgas einleitbar ist, und mindestens eine mit der Prozesskammer (1) verbundenen Reinigungseinrichtung (7) zum Reinigen des Prozessgases, wobei die Reinigungseinrichtung (7) eine Kühlzone (8) zum Kondensieren von Flüssigkeiten umfasst,
**dadurch gekennzeichnet, dass**
die Prozesskammer (1) eine Vorrichtung (3) zum Zuführen und Verdampfen eines flüssigen Mediums während eines Lötvorgangs aufweist und durch eine Kondensation des flüssigen Mediums in der Kühlzone (8) der Reinigungseinrichtung (7) dort feste Verunreinigungen verflüssigt werden.

6. Lötofen nach Anspruch 5
**dadurch gekennzeichnet, dass**
der Lötofen ein Reflowofen ist.

7. Lötofen nach einem der Ansprüche 5 oder 6
**dadurch gekennzeichnet, dass**
der Lötofen eine Dosierpumpe (4) umfasst, mit der das Volumen des zu verdampfenden Mediums bestimmt wird.

## Claims

1. A method for self-cleaning of a cleaning apparatus (7) of a soldering furnace, the soldering furnace comprising the cleaning apparatus (7) and at least one process chamber (1), in which a process gas is introduced, wherein, during a soldering operation a liquid medium is fed to the process chamber (1) or to the process gas circulation which evaporates, condenses in a cooling zone (8) of the cleaning apparatus (7) and liquefies solid contaminants there.

2. Method according to Claim 1, **characterized in that** the liquid medium has a boiling point in the range from 150° - 250°C.

3. Method according to Claim 2, **characterized in that** the ignition temperature of the liquid medium lies above 350°C.

4. Method according to one of Claims 1 to 3, **characterized in that** the liquid medium is ethylene glycol.

5. Soldering furnace comprising at least one process chamber (1), into which process gas for a soldering process can be introduced, and at least one cleaning apparatus (7), connected to the process chamber (1), for cleaning the process gas, the cleaning apparatus (7) comprising a cooling zone (8) for condensing liquids, **characterized in that** the process chamber (1) has a device (3) for feeding and evaporating a liquid medium during a soldering operation and solid contaminants in the cooling zone (8) of the cleaning apparatus (7) are liquefied by the liquid medium condensing in said cooling zone.

6. Soldering furnace according to Claim 5, **characterized in that** the soldering furnace is a reflow furnace.

7. Soldering furnace according to either of Claims 5 and 6, **characterized in that** the soldering furnace comprises a metering pump (4), with which the volume of the medium to be evaporated is determined.

## Revendications

1. Procédé d'auto-nettoyage d'un dispositif (7) de nettoyage d'un four de brasage, qui comprend le dispositif de nettoyage (7) et au moins une chambre de traitement (1) dans laquelle un gaz de traitement est introduit en vue d'une opération de brasage,
un fluide liquide étant apporté dans la chambre de traitement (1) ou dans le circuit de gaz de traitement pendant une opération de brasage, le fluide s'évaporant, se condensant dans une zone de refroidissement (8) du dispositif de nettoyage (7) et y liquéfiant les impuretés solides.

2. Procédé selon la revendication 1, **caractérisé en ce que** le fluide liquide a un point d'ébullition de l'ordre de 150° à 250°C.

3. Procédé selon la revendication 2, **caractérisé en ce que** la température d'allumage du fluide liquide est supérieure à 350°C.

4. Procédé selon l'une des revendications 1 à 3, **caractérisé en ce que** le fluide liquide est l'éthylène glycol.

5. Four de brasage comportant au moins une chambre de traitement (1) dans laquelle un gaz de traitement peut être introduit en vue d'une opération de brasage et au moins un dispositif de nettoyage (7) relié à la chambre de traitement (1) et servant à épurer le gaz de traitement, le dispositif de nettoyage (7) comportant une zone de refroidissement (8) qui permet de condenser des liquides,
**caractérisé en ce que**
la chambre de traitement (1) présente un dispositif (3) qui amène et vaporise un fluide liquide pendant une opération de brasage et qui y liquéfie les impuretés solides par une condensation du fluide liquide dans la zone de refroidissement (8) du dispositif de nettoyage (7).

6. Four de brasage selon la revendication 5, **caractérisé en ce que** le four de brasage est un four à fusion.

7. Four de brasage selon l'une des revendications 5 ou 6, **caractérisé en ce que** le four de brasage comporte une pompe doseuse (4) qui définit le volume du fluide à vaporiser.
